# EUROPÄISCHE PATENTSCHRIFT

(11) **EP 0 816 265 B1**
(45) Veröffentlichungstag und Bekanntmachung des Hinweises auf die Patenterteilung: **22.08.2001**
(21) Anmeldenummer: 97890115.5
(22) Anmeldetag: 01.07.1997
(51) Int. Cl.: B65G 49/06, C03B 33/023, B65G 1/10

(54) **Vorrichtung zum Sortieren von Glaszuschnitten**
Apparatus for sorting cut sheets of glass
Dispositif pour ranger des feuilles de verre coupées

(30) Priorität: 03.07.1996 AT 117896
(43) Veröffentlichungstag der Anmeldung: 07.01.1998
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(56) Entgegenhaltungen:
- EP-A- 0 048 334
- EP-A- 0 477 163
- WO-A-95/25688
- DE-A- 4 305 826

## Beschreibung

Die Erfindung betrifft eine Vorrichtung zum Sortieren von Glaszuschnitten, mit einer Hebeeinrichtung, um liegend herangeförderte Glaszuschnitte im wesentlichen lotrecht aufzurichten und mit einer Fördereinrichtung, durch welche aufgerichtete Glaszuschnitte nach beliebigen Ordnungskriterien Fächerwagen zugeführt und in diesen abgestellt werden.

Eine derartige Vorrichtung ist aus der EP 477 163 A bekannt. Die bekannte Sortiervorrichtung, in der eine Vielzahl von Fächerwagen verwendet wird, wird bevorzugt im Zusammenhang mit einer Glasschneideanlage verwendet, wie sie beispielsweise aus der DE 43 05 826 A bekannt ist.

Problematisch bei den bekannten Sortiervorrichtungen ist es, daß das Aussortieren von nicht benötigten Glaszuschnitten (Reste) und beschädigter Glaszuschnitte eines Eingriffs von Hand aus bedarf. Weiters hat es sich als nachteilig erwiesen, daß sich manchmal Probleme ergeben, wenn es längere Zeit dauert, bis mehrere nach dem gewählten Ordnungskriterium zu einer bestimmten Gruppe gehörende Glaszuschnitte (z.B. die beiden Zuschnitte zum Herstellen einer Isolierglasscheibe) von der Glasschneideanlage zugeliefert werden.

Der Erfindung liegt die Aufgabe zugrunde, eine Vorrichtung zum Sortieren von Glaszuschnitten der eingangs genannten Gattung so zu verbessern, daß das Aussortieren nicht benötigter oder beschädigter Glaszuschnitte einfach möglich ist und daß zusätzliche Pufferkapazität vorliegt.

Erfindungsgemäß wird diese Aufgabe mit den Merkmalen des Anspruches 1 gelöst.

Bevorzugte und vorteilhafte Ausgestaltungen der erfindungsgemäßen Glastafelzuschnittsortiervorrichtung sind Gegenstand der Unteransprüche.

Bei der erfindungsgemäßen Vorrichtung ist der Hebeeinrichtung zum Aufrichten der liegend herangeförderten Glaszuschnitte nicht wie aus der EP 477 163 A bekannt, nur auf einer Seite eine Fördereinrichtung zugeordnet, welche die Glaszuschnitte zu den Fächerwagen fördert, sondern dem anderen Ende der Hebeeinrichtung ist ein Pufferspeicher, z.B. in Form eines Fächerregals, zugeordnet. So wird Stauraum gewonnen, in dem, ohne den eigentlichen Sortiervorgang zu behindern, Glaszuschnitte warten können, bis der nächste Zuschnitt oder weitere Zuschnitte, die nach einem bestimmten Ordnungskriterium zu einer Gruppe von wenigstens zwei Glaszuschnitten gehören, herangefördert werden.

Dieser Pufferspeicher erlaubt es auch, eines seiner Fächer als Einrichtung zum Durchfördern von Glaszuschnitten einzurichten, so daß beschädigte und/oder nicht benötigte Zuschnitte (Reste) in einen Sammelbehälter für nicht benötigte Glaszuschnitte oder beschädigtes Glas gefördert werden können.

Weitere Einzelheiten und Merkmale der Erfindung ergeben sich aus der nachstehenden Beschreibung eines bevorzugten Ausführungsbeispieles der Erfindung, das insbesondere dazu geeignet ist, mit einer Glasschneideanlage kombiniert zu werden, wie sie beispielsweise aus der DE 43 05 826 A bekannt ist.

Es zeigt:

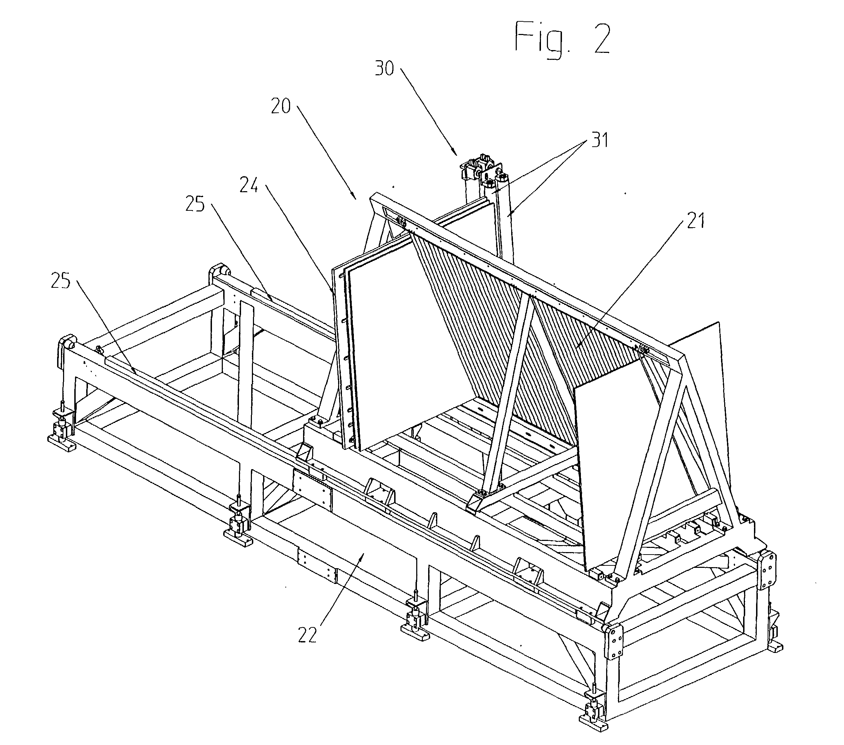

Fig. 1 in Schrägansicht eine erfindungsgemäße Sortiereinrichtung, Fig. 2 in Schrägansicht einen Pufferspeicher,

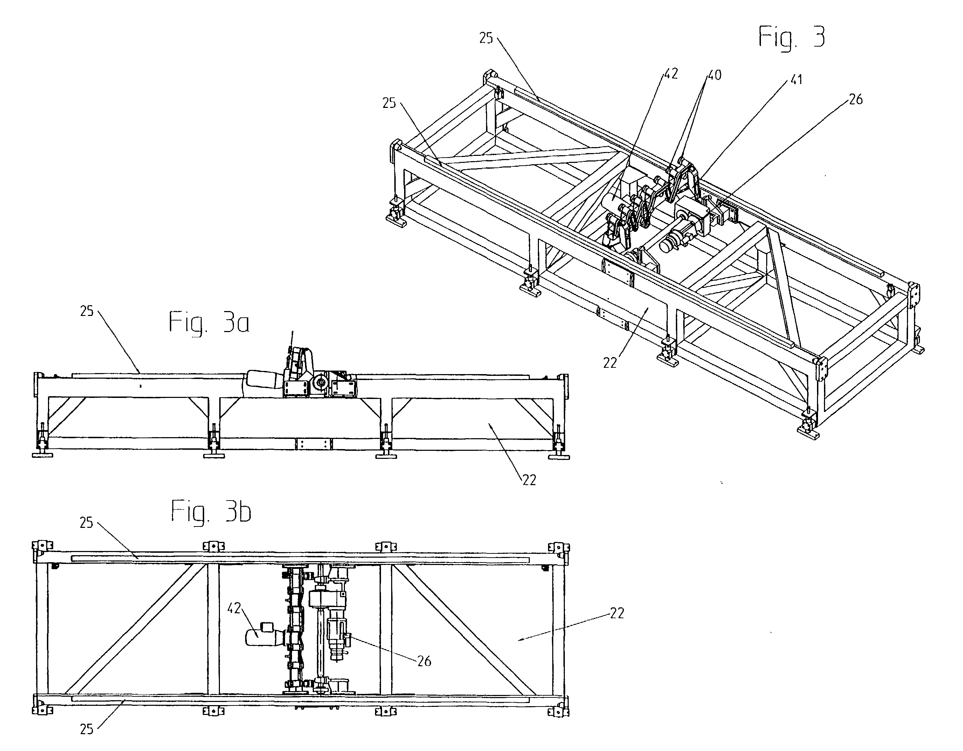

Fig. 3 das Untergestell des Pufferspeichers mit einer Fördereinrichtung,
Fig. 3a und Fig. 3b das Untergestell in anderen Ansichten,
Fig. 4, 4a und 5, 5a in unterschiedlichen Ansichten den beweglichen Teil des Pufferspeichers,
Fig. 6 eine Ausführungsform für einen Abtransportförderer, der zwischen der Vorrichtung zum Aufrichten von Glaszuschnitten und dem Pufferspeicher vorgesehen ist.
Fig. 6a bis Fig. 6d Einzelheiten des Abtransportförderers und
Fig. 7 in Draufsicht ein Ausführungsbeispiel der erfindungsgemäßen Vorrichtung mit zugeordneten Anlageteilen.

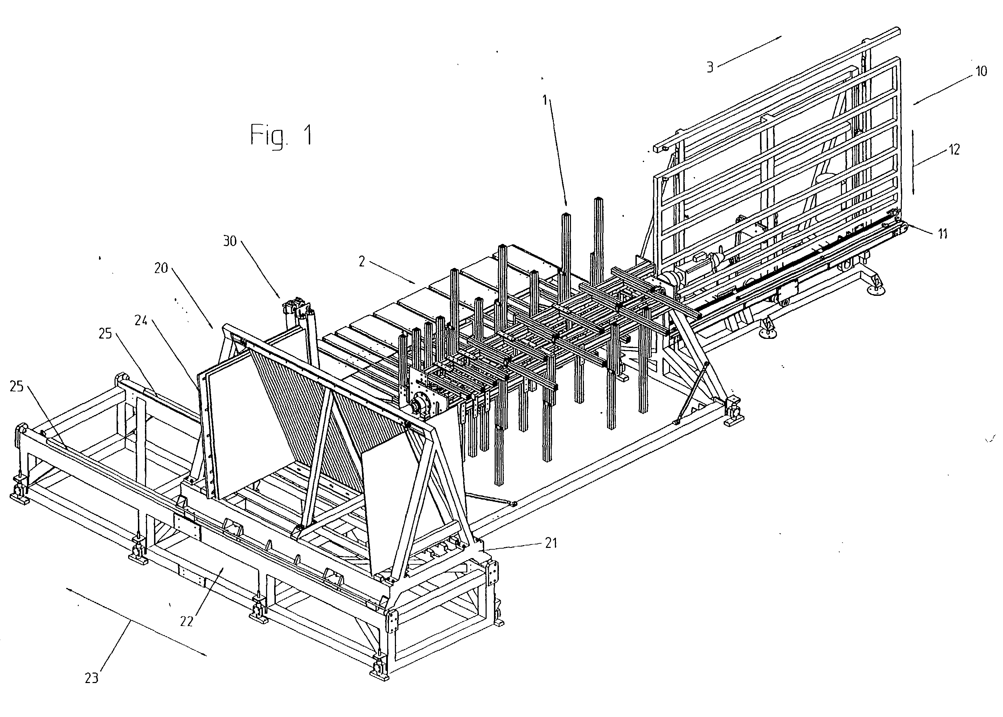

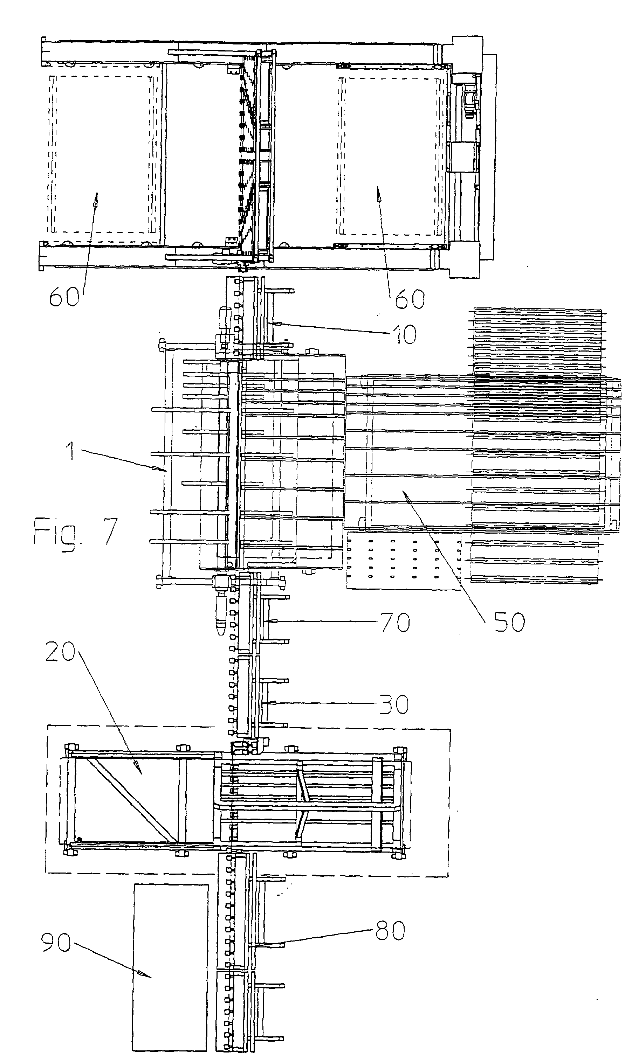

Einer in Fig. 1 gezeigten Einrichtung 1 (Hebeeinrichtung) zum Aufrichten von in Richtung des Pfeiles 2 von einer Glasschneideanlage, beispielsweise einer Glasschneideanlage 50 (Fig. 7) der aus der DE 43 05 826 A bekannten Bauart, werden Glaszuschnitte liegend zugeführt. Im Normalfall werden die Glaszuschnitte, so wie dies aus der DE 43 05 826 A bekannt ist, nach dem Aufrichten in Richtung des Pfeiles 3 in Fig. 1 auf einen Zwischenförderer 10 bewegt. Der Zwischenförderer 10 weist an seinem unteren Ende eine Fördereinrichtung, z.B. ein Förderband 11, auf, und ist in Richtung des Doppelpfeiles 12 auf und ab verstellbar. Vom Zwischenförderer 10 werden die Glaszuschnitte, so wie dies in der EP 477 163 A bekannt ist, in Richtung des Pfeiles 3 in einen von mehreren Fächerwagen 60 (Fig. 7) transportiert oder sonst wie weiterverarbeitet. Dadurch, daß der Zwischenförderer 10 höhenverstellbar ist, können Glaszuschnitte, nachdem sie von der Einrichtung 1 auf den Zwischenförderer 10 bewegt worden sind, soweit abgesenkt werden, daß ihre untere horizontale Kante in der Höhe des unteren Endes der Fächer in dem Fächerwagen 60 liegt.

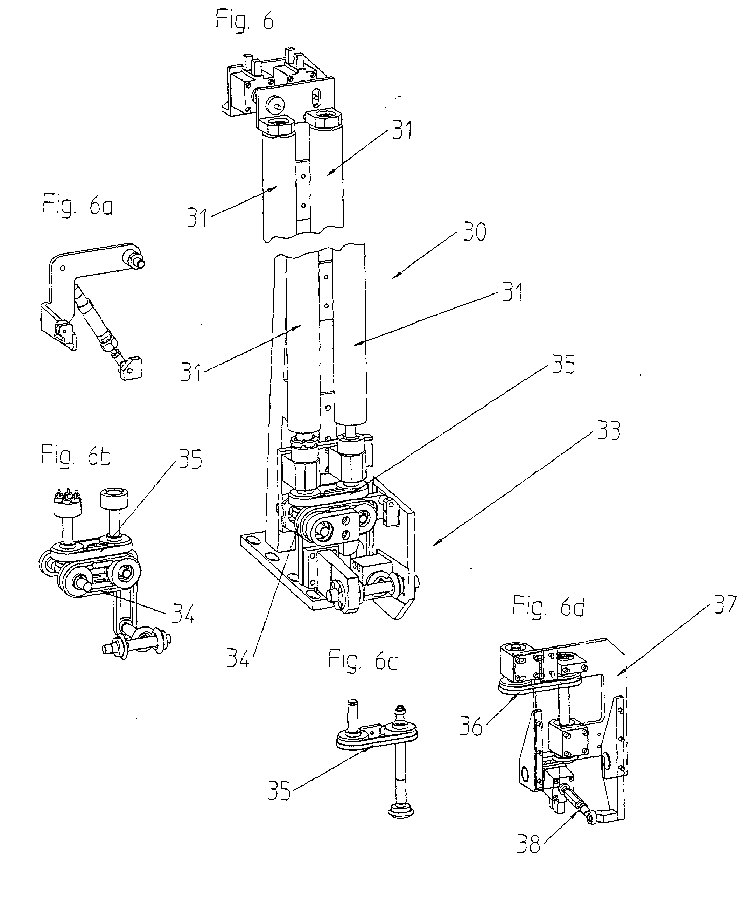

Wie aus der Gesamtdarstellung von Fig. 1 ersichtlich, ist auf der dem Zwischenförderer 10 gegenüberliegenden Seite neben der Einrichtung 1 zum Aufrichten von Glaszuschnitten entweder unmittelbar oder unter Zwischenschaltung eines Abtransportförderers 30 (sh. Fig. 6), dem ein weiterer Zwischenförderer 70 ähnlich dem Zwischenförderer 10, z.B. bestehend aus einer Rollenstützwand und einem Horizontalförderer (Förderband oder Rollenzeile) vorgeschaltet sein kann, ein Pufferspeicher 20 angeordnet. Dieser Pufferspeicher 20 ist im Ausführungsbeispiel als Fächerregal ausgebildet. Der Pufferspeicher 20 besitzt einen Wagen 21, der auf einem Untergestell 22 in Richtung des Doppelpfeiles 23 verschiebbar ist. In dem Wagen 21 sind durch gespannte Seile (vorzugsweise bestückt mit Hülsen gemäß der EP 477 163 A) gebildete Fächer (der Übersichtlichkeit wegen sind nur einzelne Teile gezeigt) vorgesehen. Ein Fach, z.B. das erste Fach weist eine mit Rollen bestückte Stützwand 24 auf und ist so als Fach zum Durchfördern von Glaszuschnitten durch den Pufferspeicher 20 ausgebildet ist.

Der Wagen 21 ist gegenüber seinem Untergestell 22, wie erwähnt, verschiebbar, um das jeweils gewünschte Fach gegenüber der Förderebene der Einrichtung 1 bzw. des Abtransportförderers 30 auszurichten, so daß ein Glaszuschnitt in ein ausgewähltes Fach des Pufferspeichers 20 transportiert und in dem als Pufferspeicher 20 dienenden Fächerregal abgestellt werden kann.

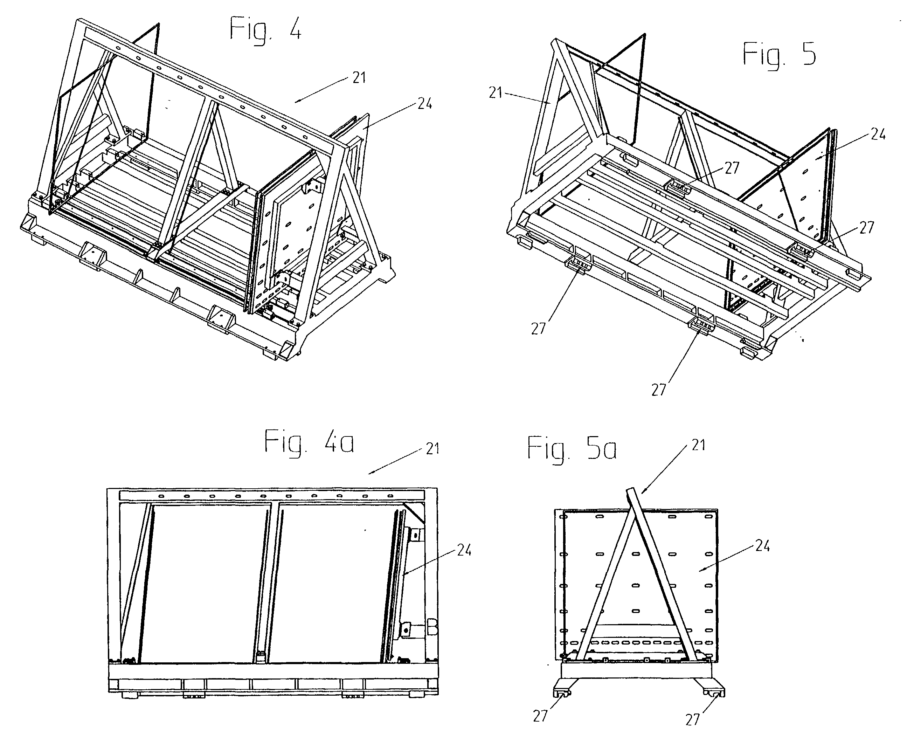

Zum Verstellen des Wagens 21 des Pufferspeichers 20 gegenüber seinem Untergestell 22 ist der Wagen 21 auf Gleitschuhen 27 (Fig. 5) an Führungsschienen 25 geführt, wobei zum Antrieb ein Antriebsmotor 26 vorgesehen ist, der mit einem (oder zwei) Ritzel in eine (oder zwei) am Wagen 21 montierte Zahnstange eingreift.

Zwischen der Hebeeinrichtung 1 und dem Pufferspeicher 20 ist der Abtransportförderer 30 mit zwei zur Förderebene parallel orientierten, drehantreibbaren Stützwalzen 31, an welchen anliegend die Glaszuschnitte bewegt werden, vorgesehen. Am unteren Ende der Stützwalzen 31 ist mit dem Linearförderer der Hebeeinrichtung 1 fluchtend, eine am unteren Rand des Glaszuschnittes angreifende Hilfsfördereinrichtung 33 vorgesehen. Die Hilfsfördereinrichtung 33 besteht im Ausführungsbeispiel aus einem am Glaszuschnitt unten angreifenden Endlosförderband 34 und knapp ober diesem aus am Glaszuschnitt von vorne und von hinten angreifenden kurzen Endlosförderbändern 35, 36. Das eine Endlosförderband 36 (Fig. 6d) ist an einem verschwenkbaren Rahmen 37 montiert, so daß es mit Hilfe eines Druckmittelzylinders 38 an die ihm zugekehrte Fläche des Glaszuschnittes angelegt werden kann. Der Hilfsförderer 33 stellt den Transport eines Glaszuschnittes von der Hebeeinrichtung 1 in eines der Fächer des Fächerregals 20 sicher, auch wenn es sich um kurze Glaszuschnitte handelt. Insbesondere wird der Rücktransport von zwischengespeicherten Glaszuschnitten über die Hebeeinrichtung 1 auf den Zwischenförderer 10 beim endgültigen Sortieren erleichtert.

Wie erwähnt, kann zwischen der Hebeeinrichtung 1 und dem Abtransportförderer 30 mit den Stützwalzen 31 ein Zwischenförderer 70 (Fig. 7) vorgesehen sein, wenn dies räumliche Erfordernisse zweckdienlich erscheinen lassen.

Das Fördern eines Glaszuschnitten in ein ausgewähltes Fach des Pufferspeichers 20 oder das Fördern eines Glaszuschnittes entlang der Stützwand 24 durch den Pufferspeicher 20 wird durch im Grundgestell 21 des Fächerregals 20 montierte, durch einen Motor 42 antreibbare Transportrollen 40 unterstützt. Diese Transportrollen 40 sind an einem gemeinsamen Balken 41 derart montiert, daß sie durch Verschwenken des Balkens 41 in ihre Wirklage angehoben, wenn ein Glaszuschnitt in ein Fach des Pufferspeichers 20 transportiert oder durch den Pufferspeicher 20 durchgefördert werden soll. Um das Verstellen des Wagens 21 des Pufferspeichers 20 nicht zu behindern, können die Transportrollen 40 aus ihrer Wirklage abgesenkt werden.

Auslaufseitig der Stützwand 24 an einem Ende des Wagens 21 des Pufferspeichers 20 kann eine weitere Fördereinrichtung 80 vorgesehen sein, deren untere Stützrollen angetrieben sein können, um durch den Pufferspeicher 20 geförderte Glaszuschnitte (Reste, beschädigte Zuschnitte) weiter bis zu einer Sammelwanne 90 für Glasbruch zu transportieren. Die Stützwand der Fördereinrichtung 80 kann mit Hilfe eines Druckmittelzylinders nach vorne gekippt werden, um Glaszuschnitte in die Sammelwanne 90 abzukippen.

In Fig. 7 ist in Draufsicht eine Anlage zum Sortieren von Glaszuschnitten gezeigt, welche die erfindungsgemäße Einrichtung zum Sortieren von Glaszuschnitten enthält. In Fig. 7 ist gezeigt, daß die Einrichtung 1 zum Aufrichten der liegend herangeförderten Glaszuschnitte neben dem abgabeseitigen Ende eines Glasschneidetisches 50 angeordnet ist. Auf der einen Seite der Einrichtung 1 zum Aufrichten von Glaszuschnitten ist der Zwischenförderer 10 angeordnet, der die Glaszuschnitte in einen der an seiner Abgabeseite bereitgestellte Fächerwagen 60 nach beliebigen Ordnungskriterien sortiert abstellt.

Auf der dem Zwischenförderer 10 gegenüberliegenden Seite der Einrichtung 1 zum Aufrichten von Glasscheiben ist der Zwischenförderer 70 vorgesehen, der ähnlich ausgebildet sein kann wie der Zwischenförderer 10. Im Anschluß an den Zwischenförderer 70 ist der Abtransportförderer 30 vorgesehen, der beispielsweise die in Einzelheiten in Fig. 6 bis 6d gezeigte Konstruktion besitzt. Nach diesem Abtransportförderer 30 ist der als Fächerregal ausgebildete Pufferspeicher 20 vorgesehen. Auf der dem Abtransportförderer 30 gegenüberliegende Seite des Pufferspeichers 20 ist die Fördereinrichtung 80 vorgesehen, deren Stützwand nach vorne gekippt werden kann, so daß auf der Fördereinrichtung 80 stehende und an ihrer Stützwand lehnende Glaszuschnitte in die vor der Fördereinrichtung 80 angeordnete Sammelwanne 90 abgekippt werden können.

Zusammenfassend kann ein Ausführungsbeispiel der Erfindung wie folgt dargestellt werden:

Bei einer Sortieranlage für Glaszuschnitte ist neben einer Einrichtung 1 zum Aufrichten von liegend herangeförderten Glaszuschnitten auf der einem Förderer 10, mit dem Glaszuschnitte in Fächerwagen 60, in welchen sie sortiert abgestellt werden, gegenüberliegenden Seite ein Pufferspeicher 20 vorgesehen. Der Pufferspeicher 20 ist ein Fächerregal, dessen Fächer von mehreren gespannten Seilen gebildet werden. In dem Pufferspeicher 20 können Glaszuschnitte abgestellt werden, ohne den übrigen Sortiervorgang zu behindern. Um die Fächer des Fächerregals des Pufferspeichers 20 gegenüber der Förderebene der Einrichtung 1 zum Aufstellen von Glaszuschnitten auszurichten, ist der Fächer aufweisende Wagen 21 des Pufferspeichers 20 gegenüber seinem Grundgestell 22 quer zur Förderebene verstellbar.

Einem der Fächer des Pufferspeichers 20 ist eine mit Rollen bestückte Wand 24 zugeordnet, so daß beschädigte Zuschnitte oder nicht benötigte Glaszuschnitte (Reste) durch den Pufferspeicher 20 in eine Sammelwanne 90 gefördert werden können. Um den sicheren Transport von Glaszuschnitten aus die Einrichtung 1 zum Aufrichten von Glaszuschnitten in den Pufferspeicher 20 zu gewährleisten, auch wenn es sich um kleine Zuschnitte handelt, ist zwischen der Einrichtung 1 zum Aufrichten von Glaszuschnitten und dem Pufferspeicher 20 ein Abtransportförderer 30 vorgesehen, der zwei annähernd lotrechte drehantreibbare Walzen 31 und am unteren Ende derselben einen Hilfsförderer 33 mit zwei an den Flächen des Glaszuschnittes angreifenden und einem am unteren Rand des Glaszuschnittes angreifenden Fördermitteln aufweist, vorgesehen.

## Patentansprüche

1. Vorrichtung zum Sortieren von Glaszuschnitten, mit einer Hebeeinrichtung (1) zum Aufrichten von horizontal herangeförderten Glaszuschnitten in eine im wesentlichen vertikale Lage, mit einem Zwischenförderer (10), der neben der Hebeeinrichtung (1) zum Aufrichten von Glaszuschnitten angeordnet ist, und über welchen die vertikal stehenden Glastafelzuschnitte wenigstens einem Fächerregal (60) zuführbar sind, um diese dort nach beliebigen Ordnungskriterien abzustellen, dadurch gekennzeichnet, daß auf der dem Zwischenförderer (10) bzw. dem Fächerregal (60) gegenüberliegenden Seite der Hebeeinrichtung (1) zum Aufrichten der Glastafelzuschnitte ein Pufferspeicher (20) vorgesehen ist.

2. Vorrichtung nach Anspruch 1, dadurch gekennzeichnet, daß der Pufferspeicher (20) ein Fächerregal ist, dessen Fächer durch Verschieben senkrecht zur Förderebene der Einrichtung (1) zum Aufstellen ausrichtbar sind.

3. Vorrichtung nach Anspruch 1 oder 2, dadurch gekennzeichnet, daß das Fächerregal (20) mehrere durch gespannte Seile od. dgl. gebildete Fächer und wenigstens ein mit einer Stützwand (24) ausgestattetes Fach zum Durchfördern von Glaszuschnitten durch das Fächerregal (20) aufweist.

4. Vorrichtung nach Anspruch 2 oder 3, dadurch gekennzeichnet, daß im ortsfesten Untergestell (22) des Fächerregals (20) eine Reihe von Transportrollen (40) vorgesehen sind, die in ihre in einer der Fächer von unten eingreifende Stellung anhebbar und aus dieser Wirkstellung in eine Bereitschaftsstellung absenkbar sind.

5. Vorrichtung nach Anspruch 4, dadurch gekennzeichnet, daß die Transportrollen (40) Nutenrollen sind.

6. Vorrichtung nach Anspruch 4 oder 5, dadurch gekennzeichnet, daß die Transportrollen (40) auf einem gemeinsamen Balken (41) montiert sind und durch Verschwenken des Balkens (41) in bzw. aus ihrer Betriebsstellung verstellbar sind.

7. Vorrichtung nach einem der Ansprüche 1 bis 6, dadurch gekennzeichnet, daß zwischen dem Abgabeende der Einrichtung (1) zum Aufstellen von Glaszuschnitten und dem Pufferspeicher (20) eine Fördereinrichtung (30) für in den Pufferspeicher (20) zu transportierende Glaszuschnitte vorgesehen ist.

8. Vorrichtung nach Anspruch 7, dadurch gekennzeichnet, daß die Fördereinrichtung (30) wenigstens eine annähernd lotrechte Stützwalze (31) aufweist, an derem unteren Ende eine Hilfsfördereinrichtung (33) zum Abstützen des Glastafelzuschnittes von unten her vorgesehen ist.

9. Vorrichtung nach Anspruch 8, dadurch gekennzeichnet, daß zwei zueinander parallele Stützwalzen (31) vorgesehen sind.

10. Vorrichtung nach Anspruch 8 oder 9, dadurch gekennzeichnet, daß der im Bereich des unteren Endes der Stützwalze (31) vorgesehene Hilfsförderer (33) an beiden Flächen eines Glaszuschnittes und am unteren Rand desselben angreifende Fördermittel (34, 35, 36) aufweist,

11. Vorrichtung nach Anspruch 10, dadurch gekennzeichnet, daß die Fördermittel (34, 35, 36) Endlosförderbänder sind.

12. Vorrichtung nach Anspruch 10 oder 11, dadurch gekennzeichnet, daß eines (36) der an den Flächen eines Glaszuschnittes angreifenden Fördermittel (35, 36) quer zur Ebene des Glaszuschnittes verstellbar ist.

13. Vorrichtung nach einem der Ansprüche 1 bis 12, dadurch gekennzeichnet, daß neben dem Pufferspeicher (20) auf dessen der Einrichtung (1) zum Aufrichten von Glaszuschnitten gegenüberliegenden Seite eine weitere Fördereinrichtung (80) mit einer Stützwand und mit einem Linearförderer am unteren Ende der Stützwand vorgesehen ist, und daß die Stützwand um eine untere horizontale Achse nach vorne verschwenkbar ist, um Glaszuschnitte von ihr abzukippen.

14. Vorrichtung nach einem der Ansprüche 1 bis 13, dadurch gekennzeichnet, daß zwischen der Einrichtung (1) zum Aufrichten von Glaszuschnitten und der Fördereinrichtung (30) ein Zwischenförderer (70) angeordnet ist.

## Claims

1. Device for sorting cut sheets of glass, having a lifting device (1) for mounting horizontally-conveyed cut sheets of glass into a substantially vertical position, having an intermediate conveyor (10) which is disposed next to the lifting device (I) for vertically mounting cut sheets of glass, and via which conveyor the cut plate glass sheets, which are standing upright, can be delivered to at least one compartment rack (60) in order to place said sheets there according to any sorting criteria, characterised in that a buffer store (20) is provided on the side of the lifting device (1) for vertically mounting the cut sheets of plate glass, which side is opposite to the intermediate conveyor (10) or to the compartment rack (60).

2. Device according to claim 1, characterised in that the buffer store (20) is a compartment rack, the compartments of which can be aligned by displacement perpendicular to the conveying plane of the device (1) for vertical mounting.

3. Device according to claim 1 or 2, characterised in that the compartment rack (20) has a plurality of compartments, which are formed by tensioned ropes or the like, and has at least one compartment, which is fitted with a support wall (24), for through-conveying of cut sheets of glass through the compartment rack (20).

4. Device according to claim 2 or 3, characterised in that a row of transport rollers (40) are provided in the stationary underframe (22) of the compartment rack (20), which rollers can be lifted into their position engaging in one of the compartments from below and can be lowered out of this operational position into a standby position.

5. Device according to claim 4, characterised in that the transport rollers (40) are grooved rollers.

6. Device according to claim 4 or 5, characterised in that the transport rollers (40) are mounted on a common girder (41) and are displaceable into or out of their operational position by means of swivelling of the girder (41).

7. Device according to one of the claims 1 to 6, characterised in that a conveying device (30) for cut sheets of glass, which are to be transported into the buffer store (20), is provided between the delivery end of the device (1) for vertical mounting of the cut sheets of glass and the buffer store (20).

8. Device according to claim 7, characterised in that the conveying device (30) has at least one approximately vertical backing roller (31), at the lower end of which an auxiliary conveying device (33) for support of the cut sheet of plate glass from below is provided.

9. Device according to claim 8, characterised in that two mutually parallel backing rollers (31) are provided.

10. Device according to claim 8 or 9, characterised in that the auxiliary conveyor (33), which is provided in the region of the lower end of the backing roller (31), has conveying means (34, 35, 36) which engage on both surfaces of a cut sheet of glass and at the lower edge of the same.

11. Device according to claim 10, characterised in that the conveying means (34, 35, 36) are endless conveyor belts.

12. Device according to claim 10 or 11, characterised in that one (36) of the conveying means (35, 36), which engage on the surfaces of a cut sheet of glass, is displaceable transversely to the plane of the cut sheet of glass.

13. Device according to one of the claims 1 to 12, characterised in that there is provided, next to the buffer store (20) and on the opposite side to the device (1) for vertically mounting cut sheets of glass, a further conveying device (80), which has a support wall and a linear conveyor at the lower end of the support wall, and in that the support wall can be swivelled forwards about a lower horizontal axis in order to tip the cut sheets of glass away from it.

14. Device according to one of the claims 1 to 13, characterised in that an intermediate conveyor (70) is disposed between the device (1) for vertically mounting cut sheets of glass and the conveying device (30).

## Revendications

1. Dispositif pour trier des feuilles de verre découpées, comportant un dispositif de redressement (1) pour dresser dans une position essentiellement verticale des feuilles de verre découpées, transportées horizontalement, un transporteur intermédiaire (10) qui est disposé à côté du dispositif de redressement (1) pour dresser les feuilles de verre découpées et à l'aide duquel les feuilles de verre découpées, dressées verticalement, peuvent être placées dans au moins un rayonnage-râtelier (60) aux fins de les ranger en fonction de critères de tri donnés, caractérisé en ce qu'un magasin tampon (20) est prévu du côté du dispositif de levage (1) pour dresser les feuilles de verre découpées opposé au transporteur intermédiaire (10) ou au rayonnage-râtelier (60).

2. Dispositif selon la revendication 1, caractérisé en ce que le magasin tampon (20) est un rayonnage-râtelier, dont les compartiments, à des fins de chargement, peuvent être positionnés par déplacement perpendiculairement au plan de transport du dispositif (1).

3. Dispositif selon la revendication 1 ou 2, caractérisé en ce que le rayonnage-râtelier (20) comporte plusieurs compartiments formés par des câbles tendus ou similaires et au moins un compartiment pourvu d'une paroi d'appui (24) pour l'acheminement des feuilles de verre découpées à travers le rayonnage-râtelier (20).

4. Dispositif selon la revendication 2 ou 3, caractérisé en ce qu'il est prévu dans le châssis (22) stationnaire du rayonnage-râtelier (20) une rangée de galets de transport (40) qui peuvent être soulevés dans une position dans laquelle ils font saillie par le dessous dans un compartiment et qui peuvent être abaissés depuis cette position active dans une position d'attente.

5. Dispositif selon la revendication 4, caractérisé en ce que les galets de transport (40) sont des galets à gorge.

6. Dispositif selon la revendication 4 ou 5, caractérisé en ce que les galets de transport (40) sont montés sur une poutre (41) commune et peuvent être amenés dans leur position de travail ou hors de celle-ci par pivotement de ladite poutre (41).

7. Dispositif selon une des revendications 1 à 6, caractérisé en ce qu'il est prévu, entre l'extrémité de sortie du dispositif (1) de redressement de plaques de verre découpées et le magasin tampon (20), un dispositif de transport (30) pour des feuilles de verre découpées à amener dans le magasin tampon (20).

8. Dispositif selon la revendication 7, caractérisé en ce que le dispositif de transport (30) comporte au moins un rouleau d'appui (31) sensiblement vertical à l'extrémité inférieure duquel il est prévu un dispositif de transport auxiliaire (33) pour supporter par le dessous la feuille de verre découpée.

9. Dispositif selon la revendication 8, caractérisé en ce qu'il est prévu deux rouleaux d'appui (31) mutuellement parallèles.

10. Dispositif selon la revendication 8 ou 9, caractérisé en ce que le dispositif de transport auxiliaire (33) prévu dans la région de l'extrémité inférieure du rouleau d'appui (31) présente des moyens de transport (34, 35, 36) qui agissent sur les deux faces d'une feuille de verre découpée et sur le bord inférieur de celle-ci.

11. Dispositif selon la revendication 10, caractérisé en ce que les moyens de transport (34, 35, 36) sont des bandes transporteuses sans fin.

12. Dispositif selon la revendication 10 ou 11, caractérisé en ce qu'un (36) des moyens de transport (35,36) qui agissent sur les faces d'une feuille de verre découpée peuvent être déplacés transversalement au plan de la feuille de verre découpée.

13. Dispositif selon une des revendications 1 à 12, caractérisé en ce qu'il est prévu à côté du magasin tampon (20) du côté de celui-ci éloigné du dispositif (1) de redressement des feuilles de verre découpées, un dispositif de transport (80) supplémentaire avec une paroi d'appui et un transporteur linéaire à l'extrémité inférieure de ladite paroi d'appui, et en ce que la paroi d'appui peut pivoter vers l'avant, autour d'un axe horizontal inférieur, aux fins de décharger par basculement des feuilles de verre découpées.

14. Dispositif selon la revendication 1 à 13, caractérisé en ce qu'un transporteur intermédiaire (70) est disposé entre le dispositif (1) de redressement des feuilles de verre découpées et le dispositif de transport (30).
